# EUROPEAN PATENT SPECIFICATION

(11) **EP 4 354 572 B1**
(45) Date of publication and mention of the grant of the patent: **06.05.2026**
(21) Application number: 23816388.5
(22) Date of filing: 01.06.2023
(51) Int. Cl.: H01M 10/04, B65G 21/20, B65G 47/90, B65G 47/91

(54) **TRANSFER DEVICE**
TRANSFERVORRICHTUNG
DISPOSITIF DE TRANSFERT

(30) Priority: 03.06.2022 KR 20220068357
(43) Date of publication of application: 17.04.2024
(73) Proprietor: LG Energy Solution, Ltd., Seoul 07335 (KR)
(72) Inventor: JI, Seung Hyun, Daejeon 34122 (KR)
(74) Representative: Goddar, Heinz J.
(86) International application number: PCT/KR2023/007533
(87) International publication number: WO 2023/234728

(56) References cited:
- JP-A- 2014 528 883
- JP-A- 2014 528 883
- KR-A- 20200 037 975
- KR-A- 20200 037 975
- KR-A- 20200 081 903
- KR-A- 20200 081 903
- KR-A- 20210 009 779
- KR-A- 20210 009 779
- KR-B1- 101 850 811
- KR-B1- 101 850 811

## Description

### [Technical Field]

The present invention relates to a transfer device, and more specifically, to a transfer device that transports a laminate in which multiple electrodes and separators are stacked by adsorbing the laminate, as well as a transfer method using the same.

### [Background Art]

Generally, based on the shape of the battery case, battery cells are classified into cylindrical battery cells or prismatic battery cells in which an electrode assembly is housed in either a cylindrical or prismatic metal can, and a pouch-type battery cell in which an electrode assembly is housed in a pouch-type case made of aluminum laminate sheets. Among these, there is a particularly high interest in pouch-type battery cells due to their ease of shape modification and lightweight characteristics.

An electrode assembly housed in a battery case consists of a layered structure of positive electrode/separator/negative electrode, serving as a power generating element capable of charging and discharging. It can be classified into a jelly-roll type, where a long sheet-type positive electrode and negative electrode with active material coated on them are wound with a separator interposed therebetween, and a stack-type, where multiple positive electrodes and negative electrodes of a certain size are sequentially layered with separators interposed therebetween.

Moreover, to enhance the processability of conventional stack-type electrode assemblies and to meet the demand for battery cells of various shapes, development is underway for lamination/stack-type electrode assemblies that have a structure in which unit cells with electrodes and separators alternately layered and bonded are stacked.

Such an electrode assembly, due to its laminated structure of multiple electrodes and separators, is prone to issues like breaking of the laminated structure or tearing of the separators even from minor shakes or impacts during handling. Therefore, both sides of the electrode assembly are fixed with insulating tape or the like for storage.

Meanwhile, during the process of transporting the electrode assembly fixed with insulating tape or the like, it has been frequently observed that the electrodes or separators contained in the electrode assembly get damaged, leading to a poor battery cell quality.

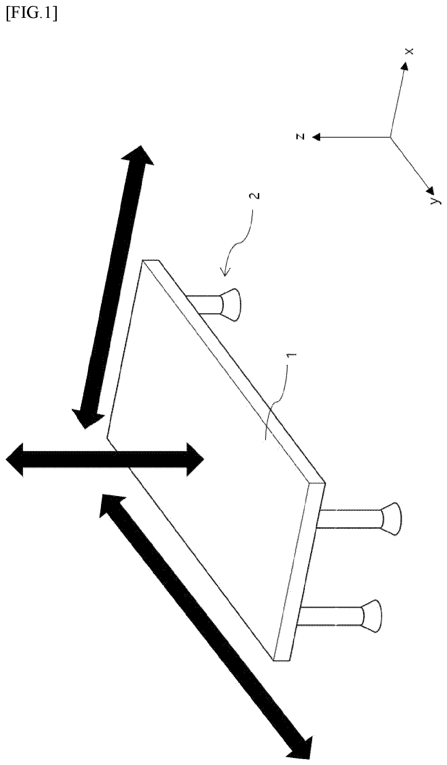

FIG. 1 illustrates a conventional transfer device for transporting an electrode assembly. The conventional transfer device may comprise a base plate 1 that is movable in all xyz axis directions, and an adsorption unit 2 coupled to the base plate 1 to adsorb the surface of an electrode assembly.

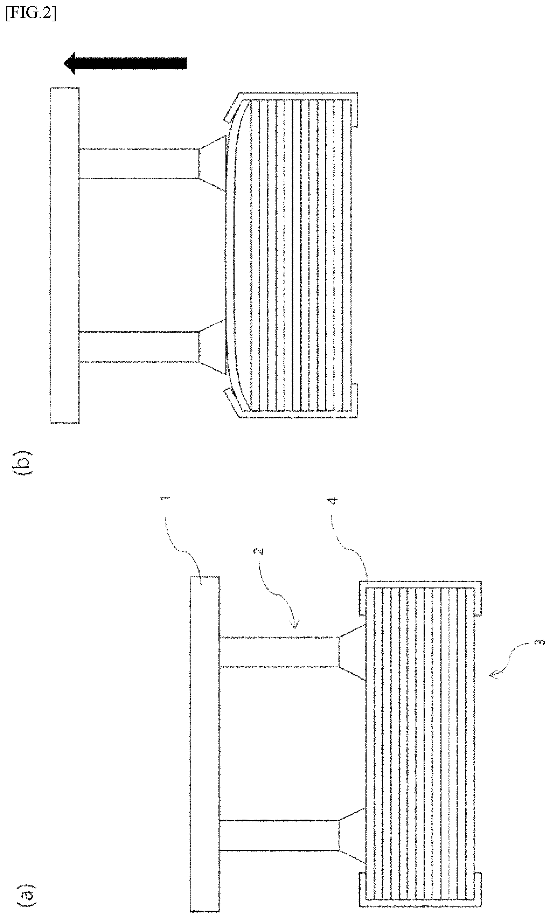

FIG. 2 illustrates the process of transporting a laminate 3 in which multiple electrodes and separators are laminated, using the transfer device from FIG. 1. As shown in FIG. 2(a), the laminate 3 has insulating tapes 4 attached to both sides to maintain and fix the laminated structure of the electrodes and separators. The base plate 1 that has moved to the upper part of the laminate 3 descends to adsorb the upper surface of the laminate 3 with the adsorption unit 2. It then lifts the laminate 3 upwards to transfer it to the desired location. However, as shown in FIG. 2(b), a gap can occur between the adsorbed part directly absorbed by the adsorption unit 2 and the unadsorbed part due to the weight of the laminate 3. This process can result in tearing or damage to electrodes and separators.

Therefore, there is a need for a transfer device with a new structure that can suppress the tearing of electrodes and separators and prevent the degradation of the quality of secondary batteries.

### [Prior Art Documents]

Korean Patent Publication No. 10-1643036

### [Description of the Invention]

### [Technical Problem]

The present invention was conceived to address the aforementioned problems, and is directed to solve the issue of quality degradation of a laminate being transferred through a structure change of a transfer device.

Other objects and advantages of the present invention will become apparent through the detailed description provided below, and will be more clearly recognized by the exemplary embodiments of the present invention. Furthermore, it will be readily apparent that the objects and advantages of the present invention may be realized by the means and combinations thereof disclosed in the claims of the patent.

### [Technical Solution]

The object is achieved by the subject-matter of claims 1 and 16. Advantageous further developments are subject-matter of the dependent claims.

### [Advantageous Effects]

According to the present invention, the process efficiency of the secondary battery can be improved by preventing the tearing of electrodes and separators that can occur during the transfer of a laminate.

### [Brief Description of the Drawings]

FIG. 1 illustrates a conventional transfer device.
FIG. 2 illustrates a process of transporting a laminate using the transfer device of FIG. 1.
FIG. 3 is a perspective view of a transfer device according to a first embodiment of the present invention.
FIG. 4 is a front view of the transfer device of FIG. 3.
FIG. 5 illustrates the operation of a support unit.
FIG. 6 illustrates a modified example of a support unit.
FIG. 7 illustrates the operation of the support unit in FIG. 6.
FIG. 8 illustrates a modified example of a rotating member.
FIG. 9 illustrates the process of an adsorption and transportation of a laminate in stages.
FIG. 10 illustrates a support unit included in the transfer device according to a second embodiment of the present invention.
FIG. 11 illustrates an example of the operation of a support unit included in the transfer device according to a third embodiment of the present invention.
FIG. 12 illustrates another example of the operation of a support unit included in the transfer device according to a third embodiment of the present invention.

### [Best Mode for Carrying Out the Invention]

Hereinafter, preferred embodiments of the present invention will be described in detail with reference to the accompanying drawings.

The embodiments of the present technology are provided to offer a more comprehensive explanation to those skilled in the art, so the shapes, sizes, and other aspects of the components shown in the drawings can be exaggerated, omitted, or simplified for clarity. Therefore, the size or ratio of each component does not fully reflect its actual size or ratio.

The present invention relates to a transfer device, and more specifically, to a transfer device that adsorbs and transfers a laminate 10 in which a plurality of electrodes and separators are stacked.

The laminate 10 has a shape in which electrodes and separators are alternately stacked, and more specifically, the laminate 10 has a shape in which a plurality of negative electrodes and positive electrodes are alternately stacked with a separator interposed therebetween.

In addition, the laminate 10 of the present invention can have an insulating tape 11 attached to its side to fix the laminated structure.

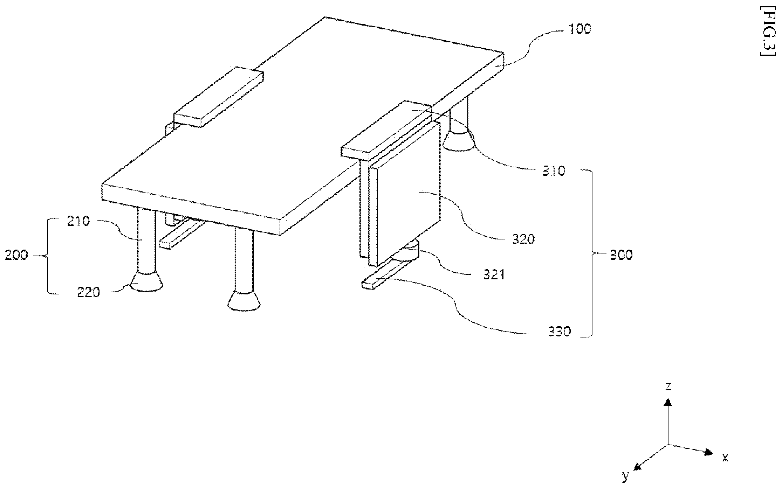

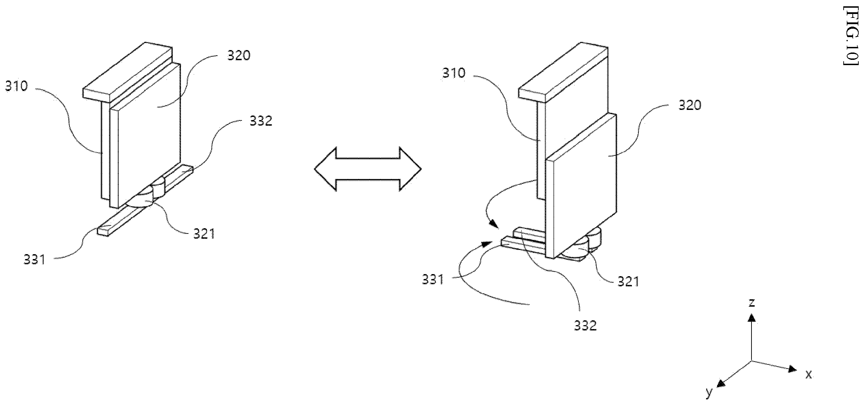

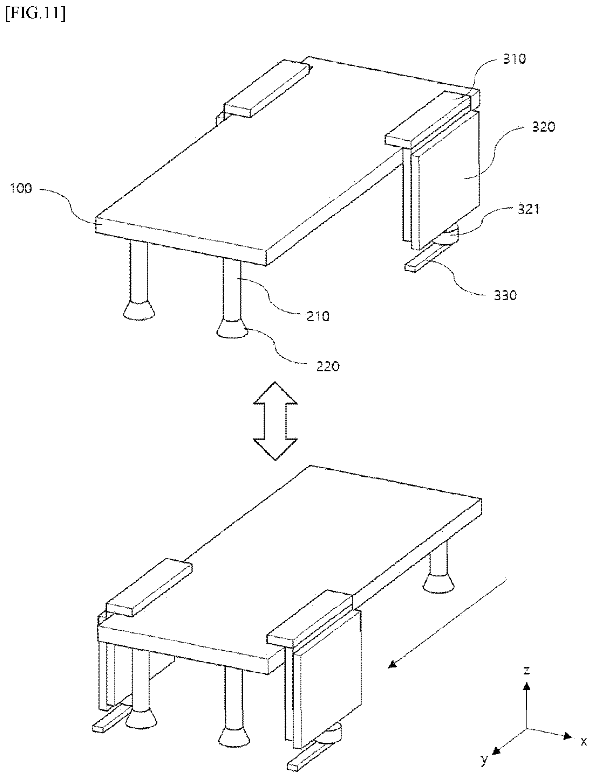

FIG. 3 through 9 relate to a transfer device according to the first embodiment of the present invention, FIG. 10 relates to a transfer device according to the second embodiment of the present invention, and FIG. 11 through 12 relate to a transfer device according to the third embodiment of the present invention.

Hereafter, the transfer devices according to each embodiment of the present invention will be described with reference to the drawings.

### (First Embodiment)

### Transfer Device

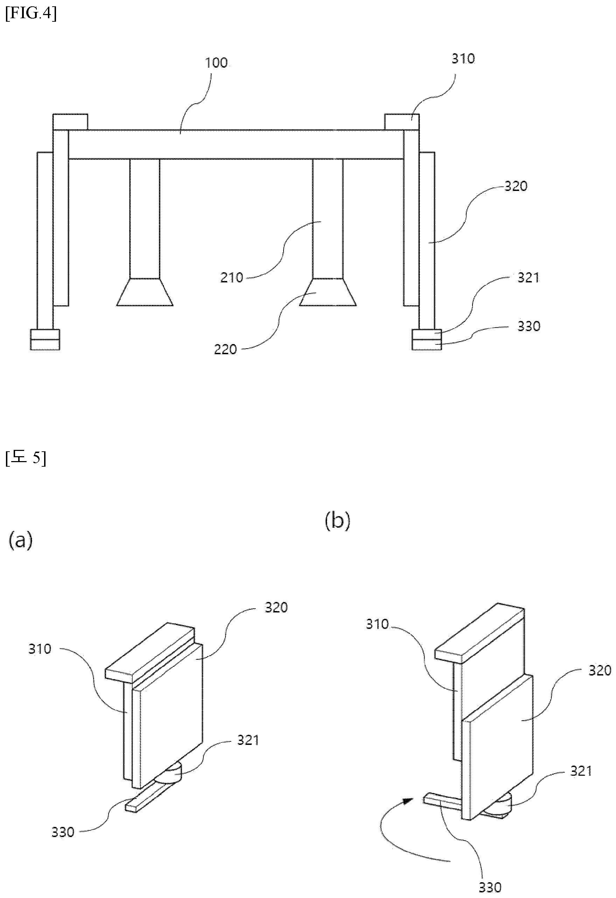

FIG. 3 is a perspective view of a transfer device according to the first embodiment of the present invention, and FIG. 4 is a front view of the transfer device in FIG. 3.

According to FIGS. 3 and 4, the transfer device of the present invention includes a base plate 100, an adsorption unit 200, and a support unit 300.

The base plate 100 is installed to be freely movable in both horizontal and vertical directions so that it can transfer the laminate 10 to a specific area.

The base plate 100 can move in a horizontal direction, and can move up and down vertically at a certain point. Referring to FIG. 3, based on the xyz coordinate system, the base plate 100 can move in all xyz axes directions.

The base plate 100 is coupled with a separate driving device (not shown) on one side.

The driving device may be any device or means to move the base plate 100 in the vertical direction (z-axis direction) and the horizontal direction (xy-axis direction), and is not particularly limited by the present invention.

The adsorption unit 200 serves to adsorb the upper surface of the laminate 10 using adsorptive power.

The adsorption unit 200, as shown in FIGS. 3 and 4, is coupled to the lower part of the base plate 100, and moves along the base plate 100.

The adsorption unit 200 is composed of an adsorption pad 220 and an adsorption tube 210.

The adsorption pad 220 directly contacts and attaches to the surface of the laminate 10. It is a typical suction or adsorption pad 220 and any material and shape that can deliver strong adsorptive power to the surface of the laminate 10 without damaging it can be used.

The adsorption tube 210 serves as the connecting part between the adsorption pad 220 and the base plate 100. Both ends of it are respectively connected to the base plate 100 and the adsorption pad 220, and it has an elongated shape in the vertical direction.

The adsorption tube 210 is of a hollow form containing a gas-moving passage (not shown) inside where gas moves, the gas-moving passage being connected to a vacuum source (not shown) which provides an adsorptive force. Thus, by operation of the vacuum source, the adsorption pad 220 in communication with the gas-moving passage adsorbs the surface of the laminate 10. At this time, the gas-moving passage and the vacuum source may be connected via a separate air hose (not shown).

The vacuum source can take the form of an air pump or any other device capable of providing an adsorptive power.

A plurality of adsorption units 200 can be coupled to the base plate 100.

Since the upper surface of the laminate 10 of the present invention has a rectangular shape, it is desirable for at least four or more adsorption units 200 to be coupled to the base plate 100. Each adsorption unit 200 contacts each corner of the laminate 10 to adsorb it.

The support unit 300 serves to support the lower part of the laminate 10 adsorbed to the adsorption unit 200.

The support unit 300 is coupled to the base plate 100. More specifically, as shown in FIGS. 3 and 4, the support unit 300 is respectively coupled to both sides of the base plate 100.

The support unit 300 is composed of a fixing member 310, a vertical moving member 320, and a rotating member 330.

The fixing member 310 is a part directly coupled to the base plate 100, which may be coupled to at least one of the upper and side parts of the base plate 100, and may be coupled to both the upper and side parts and extend downwardly as shown.

The fixing member 310 does not move up or down relative to the base plate 100, and serves to support and guide the vertical moving member 320.

The vertical moving member 320 is characterized in that it is guided by the fixing member 310 to be lifted up and down.

The vertical moving member 320 is slidably coupled to the fixing member 310 to move up and down.

The vertical moving member 320 may be moved up and down by a driving device, such as a linear motor or a pneumatic cylinder.

FIG. 5 illustrates the operation of a support unit 300.

According to FIG. 5, the fixing member 310 includes a pneumatic cylinder (not shown), and the vertical moving member 320 is coupled to said pneumatic cylinder and rises up and down according to the movement of a piston (not shown) of the pneumatic cylinder. That is, the vertical moving member 320 is coupled to a piston of the pneumatic cylinder and rises according to the movement of the piston.

It is sufficient that the pneumatic cylinder is of a structure capable of transmitting the pressure of incoming air to a piston to reciprocate the piston and the vertical moving member 320 connected to the piston in a straight path.

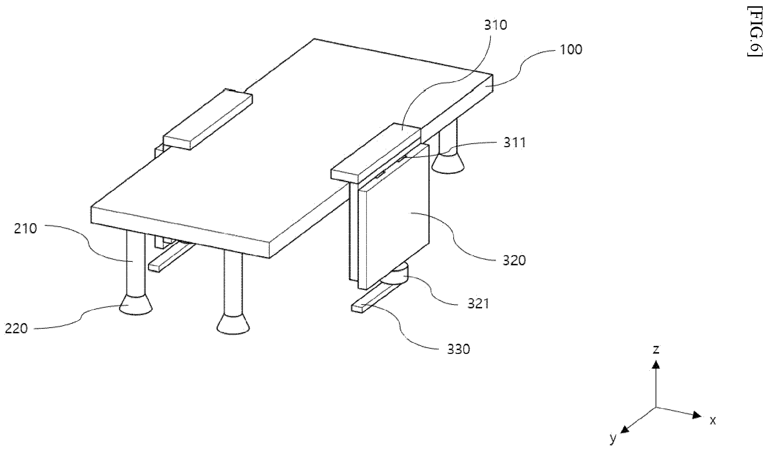

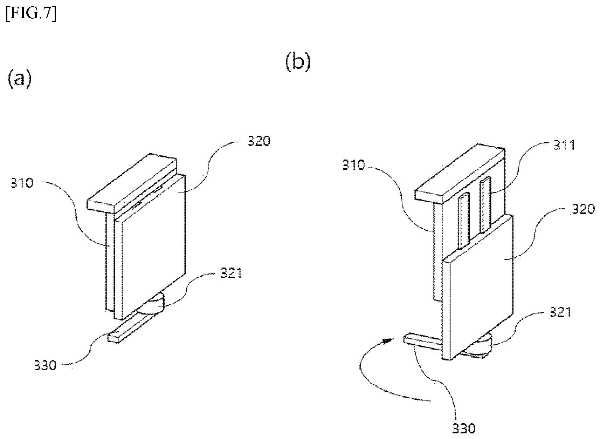

FIGS. 6 and 7 illustrate modified examples of a support unit 300.

According to FIGS. 6 and 7, the fixing member 310 includes a linear motor (not shown), and the vertical moving member 320 is coupled to the linear motor and moves up and down based on the operation of the linear motor. In this case, the fixing member 310 includes a vertical guide rail 311 formed to extend in a vertical direction to guide the movement of the vertical moving member 320, and the vertical moving member 320 is guided by the vertical guide rail 311 to move up and down.

The linear motor may include a mover (not shown) that is reciprocally moved along a vertical guide rail 311 having a straight path by supplied electricity, and the vertical moving member 320 is coupled to the mover and moves up and down with the movement of the mover.

It is sufficient for the linear motor to be of a structure capable of moving the mover and the vertical moving member 320 reciprocally in a straight path by means of supplied electricity.

The rotating member 330 is coupled with the vertical moving member 320 as shown in FIGS. 3 to 5, and is raised up and down in accordance with the movement of the vertical moving member 320, and is characterized in that it rotates about its coupling site with the vertical moving member 320.

The rotating member 330 is axially coupled to an end of the vertical moving member 320, and rotates about the coupled axis.

The rotating member 330 may be elongated in a horizontal direction about the coupled axis, and an elongated part of the rotating member 330 may rotate about the axis, wherein a lower part of a laminate 10 may be supported by the rotation of the rotating member 330.

The rotating member 330 may also include an inclined surface.

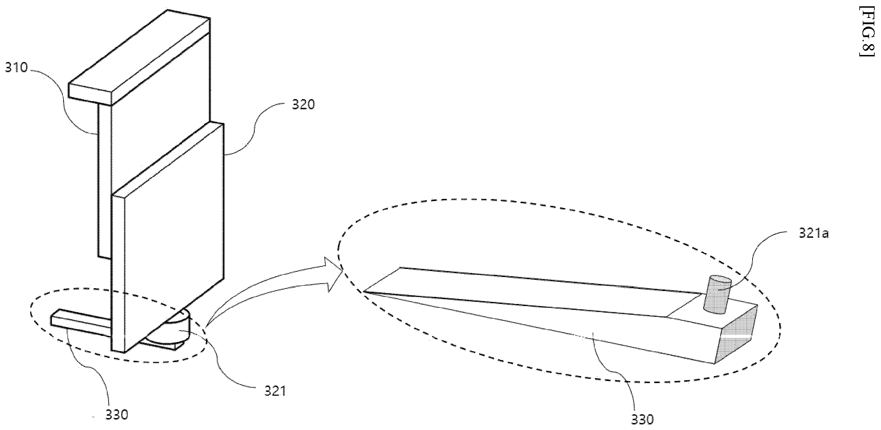

FIG. 8 illustrates a modified example of a rotating member 330 included in the support unit 300. As shown in FIG. 8, the rotating member 330 includes a forwardly sloping inclined surface at the upper part.

The vertical moving member 320 includes a rotational driving device 321, such as a servo motor or a pneumatic motor, at its end, and the rotating member 330 is coupled to the rotational driving device 321.

Specifically, the vertical moving member 320 may include a servo motor at its end, and the rotating member 330 is coupled with a rotation axis 321a formed in a vertical direction included in the servo motor. The rotation axis 321a can be rotated by electricity supplied to the servo motor, and the rotating member 330 coupled with the rotation axis 321a rotates about the rotation axis 321a by rotation of the rotation axis 321a.

In addition, the vertical moving member 320 can also include a pneumatic motor at its end, and the rotating member 330 is coupled to a rotation axis 321a formed vertically within the pneumatic motor. The rotation axis 321a can rotate due to the pressure of the air supplied to the pneumatic motor, and the rotating member 330 coupled to the rotation axis 321a rotates about the rotation axis 321a by rotation of the rotation axis 321a.

### Transfer Method

The transfer method of the present invention is characterized by utilizing a transfer device of the present invention, which includes a base plate 100, an adsorption unit 200, and a support unit 300.

The transfer method of the present invention includes preparing a laminate 10, preparing the transfer device, adsorbing the laminate, supporting, and lifting.

The preparing a laminate 10 involves preparing a laminate 10 in which a plurality of electrodes and separators are stacked.

The preparing the transfer device involves preparing the transfer device of the present invention on the prepared laminate 10.

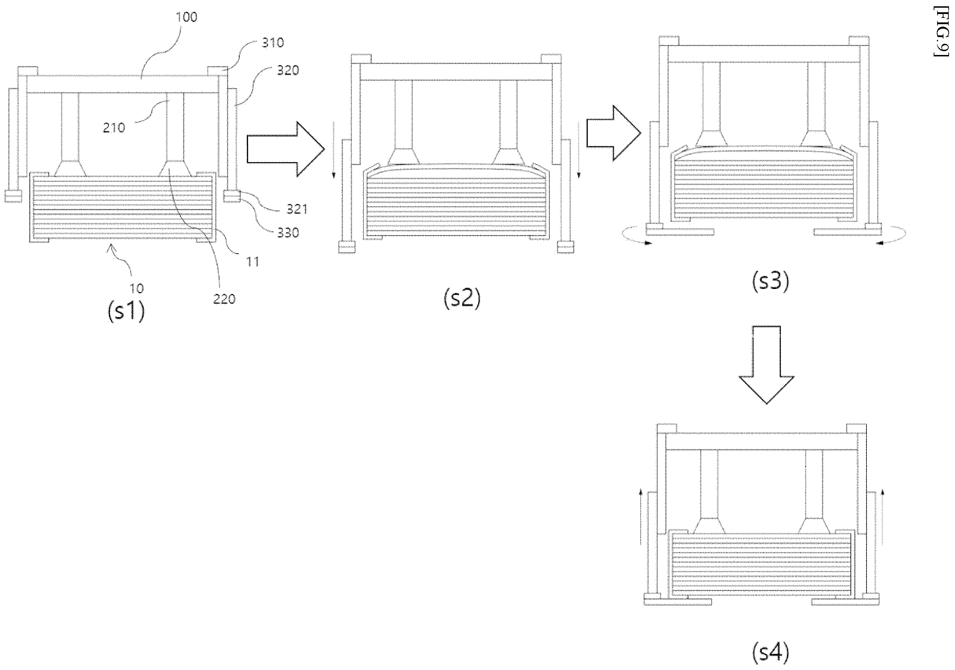

FIG. 9 is a step-by-step illustration of the process of adsorbing and transporting the laminate 10 by the transfer device. That is, FIG. 9 specifically illustrates the adsorbing the laminate s1 and the supporting s2, s3, s4.

The adsorbing the laminate s1 is a step of lowering the base plate 100 to adsorb the laminate 10.

Specifically, the base plate 100 is lowered to a height at which the adsorption pad 220 is in full contact with the upper surface of the laminate 10, as shown in FIG. 9. At this time, a rotating member 330 coupled to the lower part of the vertical moving member 320 is kept level with the vertical moving member 320 in the y-axis direction as the vertical moving member 320 descends, so as not to contact the upper part of the laminate 10.

After the movement of the base plate 100 is completed, the adsorption unit 200 suctions and adsorbs the upper surface of the laminate 10.

The supporting s2, s3, s4 are steps to support the lower part of the laminate 10 by manipulating the support unit 300.

The supporting may be divided into a sliding the vertical moving member 320 to the lower s2, a rotating the rotating member 330 s3, and a sliding the vertical moving member 320 to the upper s4.

The sliding the vertical moving member 320 to the lower S2 is a step to slide the vertical moving member 320 to the lower part.

The base plate 100 descends until the adsorption unit 200 adsorbs the laminate 10, and at the same time, the vertical moving member 320 descends on the fixing member 310. At this time, the vertical moving member 320 descends until the rotating member 330 is positioned at the lower part of the laminate 10.

The rotating the rotating member 330 s3 is a step of rotating the rotating member 330 towards the laminate 10.

The rotating member 330 is rotated toward the laminate 10 by operation of the rotational driving device 321. At this time, the rotating members 330 rotated on both sides of the base plate 100 are symmetrical to each other, and remain rotated toward the laminate 10.

The sliding the vertical moving member 320 to the upper s4 is a step of slidingly moving the vertical moving member 320 to the upper part.

The vertical moving member 320 rises on the fixing member 310, and the rotating member 330 located at the lower part of the laminate 10 rises with the rise of the vertical moving member 320 to support the lower part of the laminate 10.

The lifting is a step of lifting the base plate 100.

The base plate 100 is lifted to the upper part to transport the laminate 10 to another area while the adsorption unit 200 adsorbs the laminate 10 and the support unit 300 supports the adsorbed laminate 10.

By going through the same process as above, the transfer device is able to safely transport the laminate 10 supported by the rotating member 330 to a place of destination.

### (Second embodiment)

The transfer device according to the second embodiment of the present invention is characterized in that, at least two or more rotating members 330 are coupled to the lower part of the vertical moving member 320 in the transfer device according to the first embodiment.

FIG. 10 shows a support unit 300 included in a transfer device according to a second embodiment of the invention.

A pair of rotating members 330 are coupled to the lower part of the vertical moving member 320, as shown in FIG. 10. Specifically, the vertical moving member 320 includes a pair of rotational driving devices 321 at its lower end, and a rotation axis 321a of each of the rotational driving devices 321 rotates in different directions. The rotating member 330 includes a main rotating member 331 coupled to one of the pair of rotational driving devices 321 and a sub-rotating member 332 coupled to the other.

The main rotating member 331 and sub-rotating member 332 are respectively level with the vertical moving member 320 with respect to the y-axis direction when the adsorption unit 200 has not adsorbed the laminate 10. Subsequently, when the adsorption unit 200 adsorbs the laminate 10, and the vertical moving member 320 is lowered to a suitable position, the main rotating member 331 and the sub-rotating member 332 rotate in different directions.

The rotational driving device 321 may be installed at a predetermined spacing in the y-axis direction at the lower part of the vertical moving member 320 differently from that shown in FIG. 10, and the main rotating member 331 and sub-rotating member 332 may each support the lower part of one side of the laminate 10 by being spaced apart in a predetermined distance.

### (Third embodiment)

The transfer device according to the third embodiment of the present invention is characterized in that, the support unit 300 is coupled to the base plate 100 in the transfer device according to the first embodiment to be able to slide with respect to the base plate 100.

Specifically, the base plate 100 includes pneumatic cylinders or linear motors on both sides, and a fixing member 310 included in the support unit 300 is coupled to the pneumatic cylinders or linear motors and slides according to the operation of the pneumatic cylinders or linear motors.

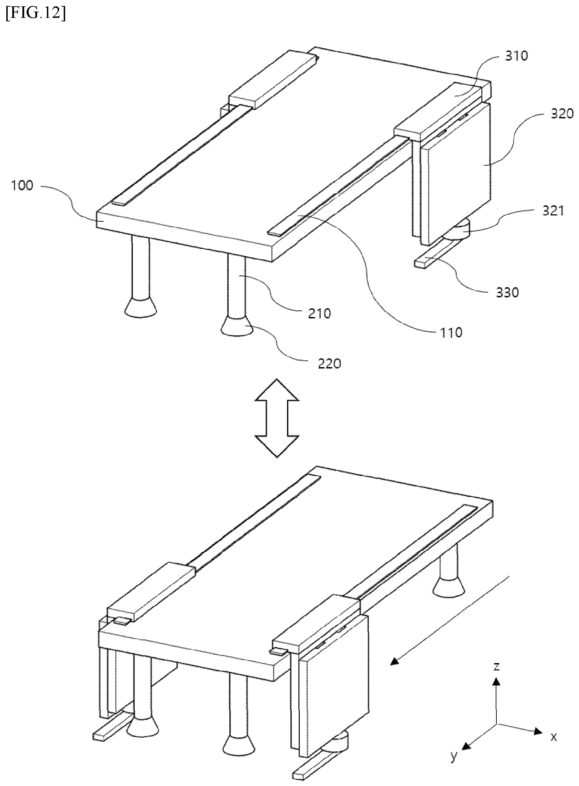

FIGS. 11 and 12 illustrate the operation of a support unit 300 included in a transfer device according to a third embodiment of the present invention.

FIG. 11 illustrates an example of the operation of a support unit 300 in sliding movement in the y-axis direction on a base plate 100.

According to FIG. 11, the fixing member 310 is coupled to a pneumatic cylinder and slidingly reciprocates according to a piston (not shown) movement of the pneumatic cylinder. In this case, the pneumatic cylinder may utilize any structure capable of transmitting the pressure of incoming air to the piston to cause the piston and the fixing member 310 connected to the piston to reciprocate in a straight path.

FIG. 12 illustrates another example of the operation of a support unit 300 in sliding movement in the y-axis direction on a base plate 100.

According to FIG. 12, the fixing member 310 is slidingly reciprocated according to the operation of a linear motor. In this case, both sides of the base plate 100 include horizontal guide rails 110 formed in a horizontal direction to guide the movement of the fixing member 310, and the fixing member 310 slides by being guided by the horizontal guide rails 110.

The linear motor may include a mover (not shown) that is reciprocally moved along the horizontal guide rail 110 having a straight path by supplied electricity, and the fixing member 310 is coupled to the mover and slidingly moves in accordance with the movement of the mover.

The linear motor may utilize any structure capable of causing the mover and fixing member 310 to reciprocate in a straight path by means of supplied electricity.

The present invention has been described in more detail above with reference to the drawings and embodiments. However, it is to be understood that the configurations shown in the drawings or embodiments described herein are only one embodiment of the invention and do not limit the invention as defined in the appended claims.

### [Reference numerals]

1: (PRIOR ART) BASE PLATE 2: (PRIOR ART) ADSORPTION UNIT
3: (PRIOR ART) LAMINATE 4: (PRIOR ART) INSULATION TAPE
10: LAMINATE 11: INSULATION TAPE
100: BASE PLATE 110: HORIZONTAL GUIDE RAIL
200: ADSORPTION UNIT 210: ADSORPTION TUBE
220: ADSORPTION PAD 300: SUPPORT UNIT
310: FIXING MEMBER 311: VERTICAL GUIDE RAIL
320: VERTICAL MOVING MEMBER 321: ROTATIONAL DRIVING DEVICE
321a: ROTATION AXIS 330: ROTATING MEMBER
331: MAIN ROTATING MEMBER 332: SUB-ROTATING MEMBER

## Claims

1. A transfer device that adsorbs and transports a laminate (10) with a plurality of electrodes and separators comprising:
a base plate (100) capable of moving in a horizontal direction, and capable of ascending and descending in a vertical direction at a certain point;
an adsorption unit (200) coupled to a lower part of the base plate (100) and configured to absorb an upper surface of the laminate (10); and
a support unit (300) coupled to the base plate (100) and configured to support a lower part of the laminate (10) adsorbed by the adsorption unit (200), wherein
the support unit (300) comprises:
a vertical moving member (320), and
a rotating member (330) coupled to the vertical moving member (320) and configured to rotate about a coupling point to support the laminate (10).

2. The transfer device of claim 1, wherein
the adsorption unit (200) comprises:
an adsorption pad (220) attached to the upper surface of the laminate (10); and
an adsorption tube (210) having both ends respectively coupled to the base plate (100) and the adsorption pad (220) to fix the adsorption pad (220) to the base plate (100).

3. The transfer device of claim 1, wherein
a plurality of adsorption units (200) are coupled to the lower part of the base plate (100) to adsorb each corner of the laminate (10).

4. The transfer device of claim 1, wherein
the support unit (300) comprises:
a fixing member (310) coupled to both sides of the base plate (100) and extending downward;
the vertical moving member (320) coupled to the fixing member (310) to be slidable and move vertically up and down; and
the rotating member (330) coupled to a lower part of the vertical moving member (320).

5. The transfer device of claim 4, wherein
the fixing member (310) comprises a vertical guide rail vertically extending on one side;
the vertical moving member (320) is coupled to the fixing member (310) to be guided by the vertical guide rail; and
the vertical moving member (320) is guided by the vertical guide rail to move vertically up and down with respect to the fixing member (310).

6. The transfer device of claim 5, wherein
the fixing member (310) comprises a linear motor, and
the vertical moving member (320) is coupled to the linear motor to move vertically up and down.

7. The transfer device of claim 4, wherein
the fixing member (310) comprises a pneumatic cylinder, and
the vertical moving member (320) is coupled to the pneumatic cylinder and moves vertically up and down according to a movement of a piston of the pneumatic cylinder.

8. The transfer device of claim 1, wherein
the support unit (300) is coupled to the base plate (100) to be horizontally slidable with respect to the base plate (100).

9. The transfer device of claim 4, wherein
the rotating member (330) is axially coupled to an end of the vertical moving member (320), and rotates about an axis.

10. The transfer device of claim 9, wherein
the rotating member (330) extends horizontally with respect to the axis (321a), and
the lower part of the laminate (10) adsorbed to the adsorption unit (200) is supported by the rotating member (330) rotating about the axis (321a).

11. The transfer device of claim 9, wherein
the rotating member (330) comprises a forwardly sloping inclined surface at the upper part.

12. The transfer device of claim 9, wherein
the vertical moving member (320) comprises a servo motor at an end, and
the rotating member (330) is coupled to the servo motor and rotates about a rotation axis (321a) formed in a vertical direction.

13. The transfer device of claim 9, wherein
the vertical moving member (320) comprises a pneumatic motor at its end, and
the rotating member (330) is coupled to the pneumatic motor and rotates about a rotation axis (321a) formed in a vertical direction.

14. The transfer device of claim 1, wherein
at least two or more rotating members are coupled to a lower part of the vertical moving member (320).

15. The transfer device of claim 1, wherein
the base plate (100) is coupled to a driving device for moving the base plate (100) in a vertical direction and a horizontal direction to one side.

16. A transfer method comprising:
preparing a laminate (10) in which a plurality of electrodes and separators are stacked;
preparing the transfer device according to claim 1 on the laminate (10);
adsorbing the laminate (10) by lowering the base plate (100);
manipulating the support unit (300) to support the lower part of the laminate (10); and
lifting the base plate (100).

17. The transfer method of claim 16,
wherein manipulating the support unit (300) comprises:
sliding the vertical moving member (320) to a lower part;
rotating the rotating member (330) toward the laminate (10); and
sliding the vertical moving member (320) to an upper part.

## Patentansprüche

1. Transfervorrichtung, die ein Laminat (10) mit mehreren Elektroden und Separatoren adsorbiert und transportiert, aufweisend:
eine Basisplatte (100), die in der Lage ist, sich in einer horizontalen Richtung zu bewegen, und in der Lage ist, in einer vertikalen Richtung an einem bestimmten Punkt aufzusteigen und abzusteigen;
eine Adsorptionseinheit (200), die mit einem unteren Teil der Basisplatte (100) gekoppelt ist und konfiguriert ist, eine obere Oberfläche des Laminats (10) zu absorbieren; und
eine Stützeinheit (300), die mit der Basisplatte (100) gekoppelt ist und konfiguriert ist, einen unteren Teil des Laminats (10), der durch die Adsorptionseinheit (200) adsorbiert wird, zu stützen, wobei
die Stützeinheit (300) aufweist:
ein vertikales Bewegungselement (320), und
ein Drehelement (330), das mit dem vertikalen Bewegungselement (320) gekoppelt ist und konfiguriert ist, sich um einen Kopplungspunkt zu drehen, um das Laminat (10) zu stützen.

2. Transfervorrichtung nach Anspruch 1, wobei
die Adsorptionseinheit (200) aufweist:
ein Adsorptionskissen (220), das an der oberen Oberfläche des Laminats (10) angebracht ist; und
ein Adsorptionsrohr (210), dessen beide Enden jeweils mit der Basisplatte (100) und dem Adsorptionskissen (220) gekoppelt sind, um das Adsorptionskissen (220) an der Basisplatte (100) zu befestigen.

3. Transfervorrichtung nach Anspruch 1, wobei
mehrere Adsorptionseinheiten (200) mit dem unteren Teil der Basisplatte (100) gekoppelt sind, um jede Ecke des Laminats (10) zu adsorbieren.

4. Transfervorrichtung nach Anspruch 1, wobei
die Stützeinheit (300) aufweist:
ein Befestigungselement (310), das mit beiden Seiten der Basisplatte (100) gekoppelt ist und sich nach unten erstreckt;
das vertikale Bewegungselement (320), das mit dem Befestigungselement (310) gekoppelt ist, um verschiebbar zu sein und sich vertikal auf und ab zu bewegen; und
das Drehelement (330), das mit einem unteren Teil des vertikalen Bewegungselements (320) gekoppelt ist.

5. Transfervorrichtung nach Anspruch 4, wobei
das Befestigungselement (310) eine vertikale Führungsschiene aufweist, die sich vertikal auf einer Seite erstreckt;
das vertikale Bewegungselement (320) mit dem Befestigungselement (310) gekoppelt ist, um durch die vertikale Führungsschiene geführt zu werden; und
das vertikale Bewegungselement (320) durch die vertikale Führungsschiene geführt wird, um sich vertikal nach oben und unten in Bezug auf das Befestigungselement (310) zu bewegen.

6. Transfervorrichtung nach Anspruch 5, wobei
das Befestigungselement (310) einen Linearmotor aufweist, und
das vertikale Bewegungselement (320) mit dem Linearmotor gekoppelt ist, um sich vertikal nach oben und unten zu bewegen.

7. Transfervorrichtung nach Anspruch 4, wobei
das Befestigungselement (310) einen Pneumatikzylinder aufweist, und
das vertikale Bewegungselement (320) mit dem Pneumatikzylinder gekoppelt ist und sich vertikal nach oben und unten gemäß einer Bewegung eines Kolbens des Pneumatikzylinders bewegt.

8. Transfervorrichtung nach Anspruch 1, wobei
die Stützeinheit (300) mit der Basisplatte (100) gekoppelt ist, um in Bezug auf die Basisplatte (100) horizontal verschiebbar zu sein.

9. Transfervorrichtung nach Anspruch 4, wobei
das Drehelement (330) axial mit einem Ende des vertikalen Bewegungselements (320) gekoppelt ist und sich um eine Achse dreht.

10. Transfervorrichtung nach Anspruch 9, wobei
das Drehelement (330) sich horizontal in Bezug auf die Achse (321a) erstreckt, und
der untere Teil des Laminats (10), der an der Adsorptionseinheit (200) adsorbiert wird, durch das Drehelement (330), das sich um die Achse (321a) dreht, gestützt wird.

11. Transfervorrichtung nach Anspruch 9, wobei
das Drehelement (330) eine nach vorne geneigte Neigungsoberfläche an dem oberen Teil aufweist.

12. Transfervorrichtung nach Anspruch 9, wobei
das vertikale Bewegungselement (320) einen Servomotor an einem Ende aufweist, und das Drehelement (330) mit dem Servomotor gekoppelt ist und sich um eine Drehachse (321a) dreht, die in einer vertikalen Richtung ausgebildet ist.

13. Transfervorrichtung nach Anspruch 9, wobei
das vertikale Bewegungselement (320) einen Pneumatikmotor an seinem Ende aufweist, und
das Drehelement (330) mit dem Pneumatikmotor gekoppelt ist und sich um eine Drehachse (321a) dreht, die in einer vertikalen Richtung ausgebildet ist.

14. Transfervorrichtung nach Anspruch 1, wobei
mindestens zwei oder mehr Drehelemente mit einem unteren Teil des vertikalen Bewegungselements (320) gekoppelt sind.

15. Transfervorrichtung nach Anspruch 1, wobei
die Basisplatte (100) mit einer Antriebsvorrichtung zum Bewegen der Basisplatte (100) in einer vertikalen Richtung und einer horizontalen Richtung zu einer Seite gekoppelt ist.

16. Transferverfahren umfassend:
Vorbereiten eines Laminats (10), in dem mehrere Elektroden und Separatoren gestapelt sind;
Vorbereiten der Transfervorrichtung nach Anspruch 1 auf dem Laminat (10);
Adsorbieren des Laminats (10) durch Absenken der Basisplatte (100);
Manipulieren der Stützeinheit (300), um den unteren Teil des Laminats (10) zu stützen; und
Anheben der Basisplatte (100).

17. Transferverfahren nach Anspruch 16,
wobei das Manipulieren der Stützeinheit (300) umfasst:
Verschieben des vertikalen Bewegungselements (320) zu einem unteren Teil;
Drehen des Drehelements (330) in Richtung des Laminats (10); und
Verschieben des vertikalen Bewegungselements (320) zu einem oberen Teil.

## Revendications

1. Dispositif de transfert qui adsorbe et transporte un stratifié (10) ayant une pluralité d'électrodes et de séparateurs comprenant :
une plaque de base (100) apte à se déplacer dans une direction horizontale, et apte à monter et descendre dans une direction verticale à un certain point ;
une unité d'adsorption (200) couplée à une partie inférieure de la plaque de base (100) et configurée pour absorber une surface supérieure du stratifié (10) ; et
une unité de support (300) couplée à la plaque de base (100) et configurée pour supporter une partie inférieure du stratifié (10) adsorbée par l'unité d'adsorption (200), dans lequel
l'unité de support (300) comprend :
un élément de déplacement vertical (320), et
un élément rotatif (330) couplé à l'élément de déplacement vertical (320) et configuré pour tourner autour d'un point de couplage pour supporter le stratifié (10).

2. Dispositif de transfert selon la revendication 1, dans lequel l'unité d'adsorption (200) comprend :
un tampon d'adsorption (220) assujetti à la surface supérieure du stratifié (10) ; et
un tube d'adsorption (210) ayant les deux extrémités couplées respectivement à la plaque de base (100) et au tampon d'adsorption (220) pour fixer le tampon d'adsorption (220) à la plaque de base (100).

3. Dispositif de transfert selon la revendication 1, dans lequel
une pluralité d'unités d'adsorption (200) sont couplées à la partie inférieure de la plaque de base (100) pour adsorber chaque coin du stratifié (10).

4. Dispositif de transfert selon la revendication 1, dans lequel
l'unité de support (300) comprend :
un élément de fixation (310) couplé aux deux côtés de la plaque de base (100) et s'étendant vers le bas ;
l'élément de déplacement vertical (320) couplé à l'élément de fixation (310) pour pouvoir coulisser et se déplacer verticalement vers le haut et vers le bas ; et
l'élément rotatif (330) couplé à une partie inférieure de l'élément de déplacement vertical (320).

5. Dispositif de transfert selon la revendication 4, dans lequel
l'élément de fixation (310) comprend un rail de guidage vertical s'étendant verticalement sur un côté ;
l'élément de déplacement vertical (320) est couplé à l'élément de fixation (310) à guider par le rail de guidage vertical ; et
l'élément de déplacement vertical (320) est guidé par le rail de guidage vertical pour se déplacer verticalement vers le haut et vers le bas par rapport à l'élément de fixation (310).

6. Dispositif de transfert selon la revendication 5, dans lequel
l'élément de fixation (310) comprend un moteur linéaire, et
l'élément de déplacement vertical (320) est couplé au moteur linéaire pour se déplacer verticalement vers le haut et vers le bas.

7. Dispositif de transfert selon la revendication 4, dans lequel
l'élément de fixation (310) comprend un cylindre pneumatique, et
l'élément de déplacement vertical (320) est couplé au cylindre pneumatique et se déplace verticalement vers le haut et vers le bas en fonction d'un déplacement d'un piston du cylindre pneumatique.

8. Dispositif de transfert selon la revendication 1, dans lequel
l'unité de support (300) est couplée à la plaque de base (100) pour pouvoir coulisser horizontalement par rapport à la plaque de base (100).

9. Dispositif de transfert selon la revendication 4, dans lequel
l'élément rotatif (330) est couplé axialement à une extrémité de l'élément de déplacement vertical (320) et tourne autour d'un axe.

10. Dispositif de transfert selon la revendication 9, dans lequel
l'élément rotatif (330) s'étend horizontalement par rapport à l'axe (321a), et
la partie inférieure du stratifié (10) adsorbée par l'unité d'adsorption (200) est supportée par l'élément rotatif (330) tournant autour de l'axe (321a).

11. Dispositif de transfert selon la revendication 9, dans lequel
l'élément rotatif (330) comprend une surface inclinée vers l'avant à la partie supérieure.

12. Dispositif de transfert selon la revendication 9, dans lequel
l'élément de déplacement vertical (320) comprend un servomoteur à une extrémité, et
l'élément rotatif (330) est couplé au servomoteur et tourne autour d'un axe de rotation (321a) formé dans une direction verticale.

13. Dispositif de transfert selon la revendication 9, dans lequel
l'élément de déplacement vertical (320) comprend un moteur pneumatique à son extrémité, et
l'élément rotatif (330) est couplé au moteur pneumatique et tourne autour d'un axe de rotation (321a) formé dans une direction verticale.

14. Dispositif de transfert selon la revendication 1, dans lequel
deux éléments rotatifs ou plus sont couplés à une partie inférieure de l'élément de déplacement vertical (320).

15. Dispositif de transfert selon la revendication 1, dans lequel
la plaque de base (100) est couplée à un dispositif d'entraînement pour déplacer la plaque de base (100) dans une direction verticale et une direction horizontale d'un côté.

16. Procédé de transfert consistant à :
préparer un stratifié (10) dans lequel une pluralité d'électrodes et de séparateurs sont empilés ;
préparer le dispositif de transfert selon la revendication 1 sur le stratifié (10) ;
adsorber le stratifié (10) en abaissant la plaque de base (100) ;
manipuler l'unité de support (300) pour supporter la partie inférieure du stratifié (10) ; et
soulever la plaque de base (100).

17. Procédé de transfert selon la revendication 16,
dans lequel la manipulation de l'unité de support (300) consiste à :
faire coulisser l'élément de déplacement vertical (320) vers une partie inférieure ;
faire tourner l'élément rotatif (330) vers le stratifié (10) ; et
faire coulisser l'élément de déplacement vertical (320) vers une partie supérieure.
